# DEMANDE DE BREVET EUROPEEN

(11) **EP 1 860 387 A1**
(43) Date de publication de la demande: **28.11.2007**
(21) Numéro de dépôt: 06380140.1
(22) Date de dépôt: 26.05.2006
(51) Int. Cl.: F24J 2/54

(54) **Suiveur solaire à bras articulés**

(71) Demandeur: Sevillano, Benito, 48500 Abanto Y Ciervana - Abanto Zierbena (Bizkaia) (ES)
(72) Inventeur: Sevillano, Benito, 48500 Abanto Y Ciervana - Abanto Zierbena (Bizkaia) (ES)
(74) Mandataire: Urizar Barandiaran, Miguel Angel

(57) **Abrégé**

Suiveur solaire à bras articulés, qui se compose d'un panneau solaire plat (1) formé par une ou plusieurs plaques et monté sur un support ayant la possibilité de faire varier aussi bien l'orientation horaire est/ouest que l'inclinaison saisonnière nord/sud, où :
- le support a la structure d'une colonne-tour (2) escortée des deux côtés par des bras identiques (3), une de chaque côté, articulés aussi bien par rapport au panneau (1) que par rapport au sol ;
- le panneau (1) est assemblé avec la colonne-tour (2) grâce à un accouplement (A2) et avec chacun des bras (3) grâce à un accouplement (A3), la disposition de ces trois points d'articulation formant un triangle ;
- le plan d'alignement de chaque bras articulé (3) forme un angle (α) quelconque avec le plan d'élévation solaire du panneau (1).

## Description

### OBJET DE L'INVENTION

L'objet de l'invention est un suiveur solaire ayant une nouvelle structure, de ceux qui disposent d'un panneau solaire sur un support qui le maintient en position perpendiculaire aux rayons solaires quels que soient l'heure et le jour de l'année.

La caractéristique essentielle de l'invention repose sur le fait de maintenir la surface du panneau, qui doit suivre le mouvement du soleil tout le long de son parcours diurne, appuyée sur trois points.

Cet appui constant sur trois points fait que les efforts provoqués par des conditions climatiques défavorables et par le poids lui-même de la structure et du panneau, se répartissent uniformément sur les trois. Les trois points formant un triangle, on peut concevoir des structures plus rigides et de plus grandes dimensions, en augmentant ainsi la surface du panneau capable d'effectuer le suivi solaire.

Le système de contrôle de la position du panneau par rapport au soleil est basé sur des actionneurs hydrauliques ou électriques, avec un système de contrôle électronique dans lequel les seules données sont la longitude et la latitude de l'installation et l'heure GMT.

Grâce à sa polyvalence dans la conception, il peut s'adapter à n'importe quel terrain, en réduisant la zone du sol occupé en vue d'une installation solaire rentable: on peut disposer les panneaux très près les uns des autres, sans qu'ils interfèrent entre eux, ce qui permet d'obtenir une utilisation énergétique maximale avec un minimum d'occupation superficielle.

En outre, l'installation de suiveurs solaires à bras articulés, selon l'objet de l'invention, n'affecte pas les utilisations des terrains sur lesquels ils sont installés, permettant les activités agricoles ou d'élevage dans des endroits très proches, voire sous les panneaux, en conservant l'harmonie du paysage et en ne provoquant pas de dommages irréparables dans le terrain, en cas de démantèlement de l'installation.

### ÉTAT DE LA TECHNIQUE

Ces derniers temps, la fabrication de cellules photovoltaïques a connu des progrès extraordinaires. Actuellement, elles atteignent des rendements supérieurs à 35% en laboratoire avec des systèmes de concentration solaire. Le système photovoltaïque de grande efficacité, basé sur la technologie des cellules de concentration optimise le rendement des systèmes photovoltaïques. Il consiste en un système optimum, qui concentre la lumière sur une surface bien moindre de cellule solaire, avec l'économie de silicium en résultant.

Dans un système conventionnel, comme les panneaux plats, le coût de la cellule peut supposer plus de 60% du coût total. Cependant, en concentrant la lumière, nous pouvons diminuer la surface de silicium de la cellule, ce qui permet de fabriquer des cellules plus sophistiquées et au rendement plus élevé avec un coût plus bas.

L'utilisation de cellules de concentration rend obligatoire l'utilisation de suiveurs solaires, de façon à ce que l'utilisation énergétique soit optimale.

Le suiveur solaire le plus utilisé du type connu par le demandeur est le tournesol en forme de "T". Cette technologie consiste en un système de suivi sur deux axes, composé de modules sur lesquels un parquet de lentilles de Fresnel concentre la lumière sur une matrice de cellules solaires de silicium ayant une surface 400 fois plus petite.

Ce système intégré photovoltaïque de haute concentration existant présente plusieurs déficiences :
a) il exige une grande précision, pour profiter au maximum de l'énergie reçue du soleil;
b) il dispose d'un système tournesol, où prend appui la structure du panneau sur un seul axe, ce qui, face aux intempéries toujours possibles (pluie, vent, etc.), fait qu'il perde la perpendicularité des rayons du soleil et qu'il y ait des usures dans les pièces et les moteurs de l'installation qui exigent un gros travail civil pour l'installation et un coût élevé d'entretien ;
c) les fixations au sol se font au moyen de piliers en acier vissables, ce qui augmente les travaux (en fondations de béton et lors des restitutions ultérieures du terrain).

Un autre système, dont le type est connu par le demandeur, consiste en une gamme de suiveurs solaires sur deux axes (d'une grande utilité dans les systèmes d'utilisation de l'énergie solaire, aussi bien thermique que photovoltaïque), qui est composé d'une plateforme renforcée par des arcs semi-circulaires, laquelle prend appui et tourne sur l'arête supérieure du socle en forme de tétraèdre. La plateforme a son propre mouvement sur l'axe est/ouest et le socle lui fournit le mouvement nord/sud. La forme de tétraèdre du socle lui confère une plus grande résistance structurale que le concept classique d'héliostat à colonne, car il lui faut employer peu de matériau.

Il existe un autre type de suiveurs solaires qui n'est pas parvenu à se généraliser dans l'installations d'usines de génération, des suiveurs solaires de positionnement de type hexapode, par mécanisme d'assemblage, par collecteur d'assemblage et similaires pouvant être cités.

Le suiveur solaire à bras articulés qui fait l'objet de l'invention étant de ceux qui se composent d'un panneau solaire plat formé d'une ou plusieurs plaques et monté sur un support ayant la possibilité de faire varier aussi bien l'orientation horaire est/ouest que l'inclinaison saisonnière nord/sud, se caractérise par le fait que :
a) ce support a pour structure une colonne-tour escortée, par deux bras, un de chaque côté, identiques, articulés, aussi bien par rapport su panneau que par rapport au sol, et ayant une dispostion symétrique par rapport à la colonne-tour ;
b) le panneau est assemblé à la colonne-tour au moyen d'un accouplement articulé et à chacun des bras, au moyen d'une accouplement, ceux-ci étant disposés sur trois points d'articulation qui forment un triangle ; de sorte que les efforts dus au propre poids de la structure et/ou provoqués par des conditions climatiques défavorables se répartissent de façon uniforme ;
c) le plan d'alignement de chaque bras articulé forme un angle (α) quelconque avec le plan d'élévation solaire du panneau ; de sorte que le bras compense les variations dérivant de l'élévation et de l'azimut;
d) la perpendicularité du panneau para rapport au soleil est obtenue moyennant le déploiement ou le repliement de ces bras articulés, mûs par des moyens d'action appropriés ;
e) les accouplements ont, au minimum, une double articulation ; de façon à permettre de faire basculer le panneau par rapport à la colonne-tour sur, au moins, un plan vertical et un plan horizontal ;
f) pour faire varier l'orientation horaire est/ouest du panneau, il suffit d'activer le déploiement/repliement conjoint et simultané des deux bras articulés ;
g) pour faire varier l'inclinaison saisonnière nord/sud du panneau (1), il suffit d'activer le déploiement/repliement individuel unitaire de l'un ou l'autre bras articulé (3) ;
h) le positionnement du panneau basé sur lesdits moyens d'action dispose d'un système de contrôle électronique dans lequel les seules données sont la longitude/latitude de l'installation et l'heure GMT ;

En particulier :
a) lesdits accouplements sont à articulations sphériques permettant de faire basculer dans l'espace le panneau par rapport à la tour et aux bras ;
b) chacun desdits bras articulés se compose d'un support-base fixé au sol; un premier demi-bras et un second demi-bras, articulés entre eux par l'une de leurs extrémités et articulés respectivement à ce support et au panneau par l'autre extrémité libre ; et avec des moyens d'action permettant de faire basculer, respectivement, les demi-bras à l'ouverture/ fermeture ;
c) l'articulation entre les demi-bras d'un même bras articulé réussit à compenser les variations dimensionnelles du cathète spatial et, de cette manière, suivre l'angle prédéterminé par le mouvement du soleil ;
d) lesdits moyens d'action sont des cylindres hydrauliques ;
e) le panneau est constitué par des poutres solaires amarrées à des tubes longitudinaux.

Les avantages structuraux les plus importants de ce suiveur par rapport à ceux qui sont connus sont les suivants :
- il supporte des panneaux de grande surface qui, s'ils sont montés moyennant la technologie proposée de poutres solaires, peuvent atteindre une puissance installée de 48 Kw/panneau, avec des cellules photovoltaïques de grande efficacité et basées sur la technologie de concentration.
- une grande stabilité structurale face à des conditions météorologiques défavorables.
- Le suivi de l'élévation du soleil a lieu moyennant un parcours est/ouest de + 70° à - 70° avec une précision de la position de 1°.

### DESCRIPTION DES DESSINS

Pour mieux comprendre l'objet de la présente invention, on représente sur les plans une forme préférentielle de réalisation pratique, susceptible de changements accessoires qui n'en dénaturent pas le fondement.
La figure 1a est une vue générale du panneau solaire en position de départ du parcours ou position finale, selon sa disposition et son orientation sur le terrain.
La figure 1b est un schéma correspondant à la figure 1a, où l'on a graphié les éléments qui composent un bras (3) et son angle (α) avec le plan d'élévation solaire.

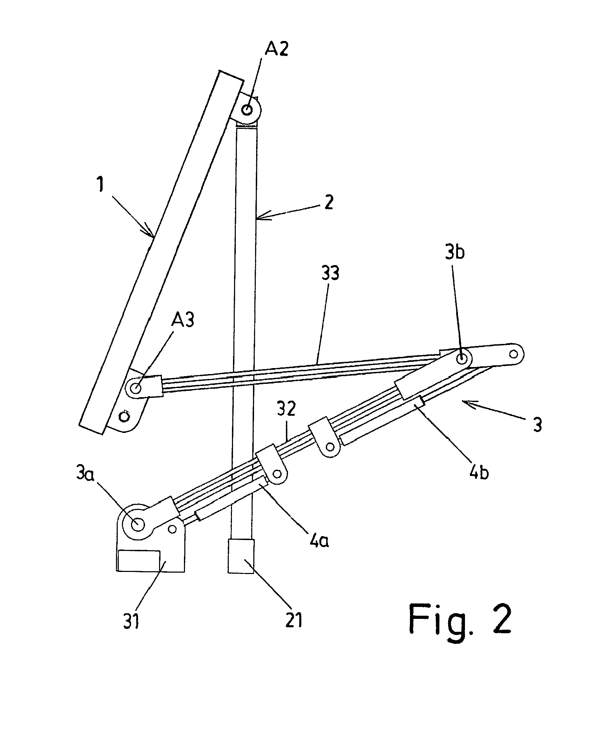

La figure 2 est une vue latérale de l'objet de l'invention.

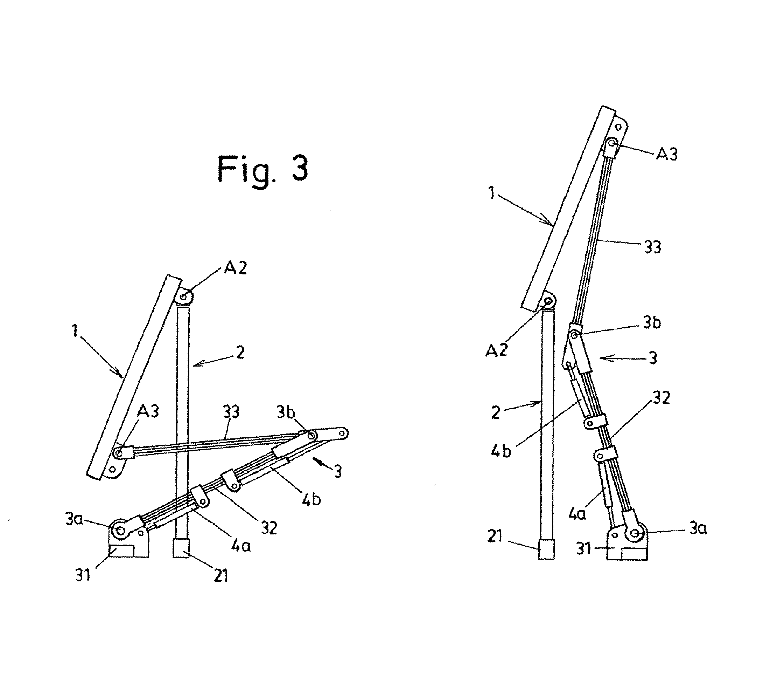

La figure 3 est une vue latérale, similaire à la figure 2, d'une disposition possible de l'objet de l'invention sur le terrain (deux unités disposées pour une utilisation énergétique maximale avec un minimum d'occupation).

La disposition des deux panneaux (1) est une disposition à l'opposite afin de ne pas projeter d'ombres.

### DESCRIPTION DE L'INVENTION

L'objet de la présente invention est un suiveur solaire à bras articulés qui, essentiellement, se compose de :
- Une colonne-tour (2) prenant appui sur le sol et avec un accouplement (A2) à son zénith, grâce auquel elle s'assemble avec la structure support du panneau (1).
- Deux bras articulés (3), actionnés avec des moyens appropriés (4a), (4b) (notamment au moyen d'un système électrique ou hydraulique).
- Un panneau solaire (1) composé, à son tour, d'un ensemble de poutres solaires (11) assemblées, pour la formation du panneau au moyen de barres. Chaque poutre solaire (11), à son tour, est constituée par un ensemble cellules élémentaires (111) composées de plaques solaires photovoltaïques ou cellules de concentration.

Le suiveur est conçu conformément aux conditions techniques et sur la base des efforts auxuqels il sera soumis à cuase du mouvement des panneaux de plus de 250 m² de superficie.

Les bras articulés (3) sont identiques entre eux et sont montés dans une disposition symétrique par rapport à la colonne-tour (2).

Pour simplifier l'explication, on ne fera allusion qu'à l'un d'eux.

Chaque bras articulé (3) se compose de:
- un support-base (31), fixé au sol ;
- un premier demi-bras (32), articulé en (3a) par une extrémité au support-base (31);
- un second demi-bras (33), articulé en (A3) par une extrémité au panneau (1).

Les demi-bras (32), (33) sont articulés entre eux en (3b) par leur autre extrémité et disposent de leurs moyens respectifs d'action (4a), (4b) pour les faire basculer à l'ouverture/fermeture.

En particulier, lesdits moyens d'action (4a), (4b) sont des cylindres hydrauliques, quoique tout autre qui n'altère, ne change ou ne modifie pas le caractère essentiel proposé soit inclus dans l'objet de l'invention.

En particulier, lesdits accouplements (A2), (A3) sont des articulations sphériques, quoique tout autre qui n'altère, ne change ou ne modifie pas le caractère essentiel proposé soit inclus dans l'objet de l'invention.

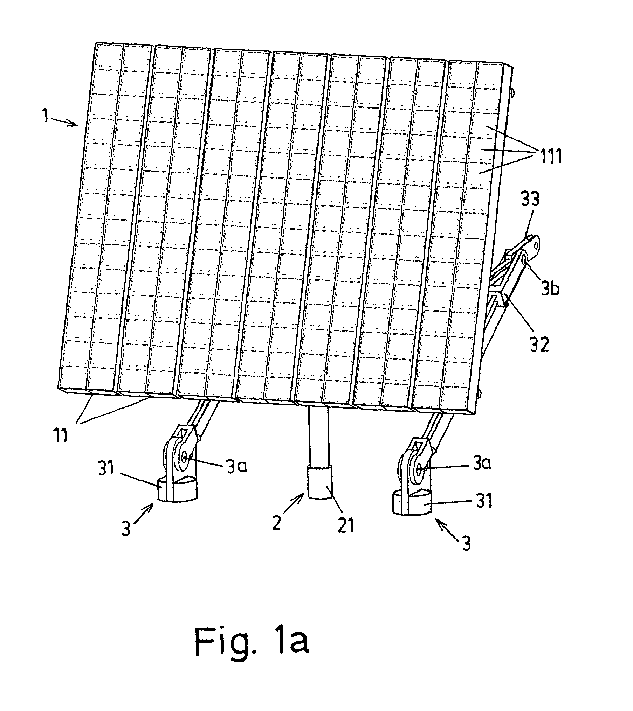

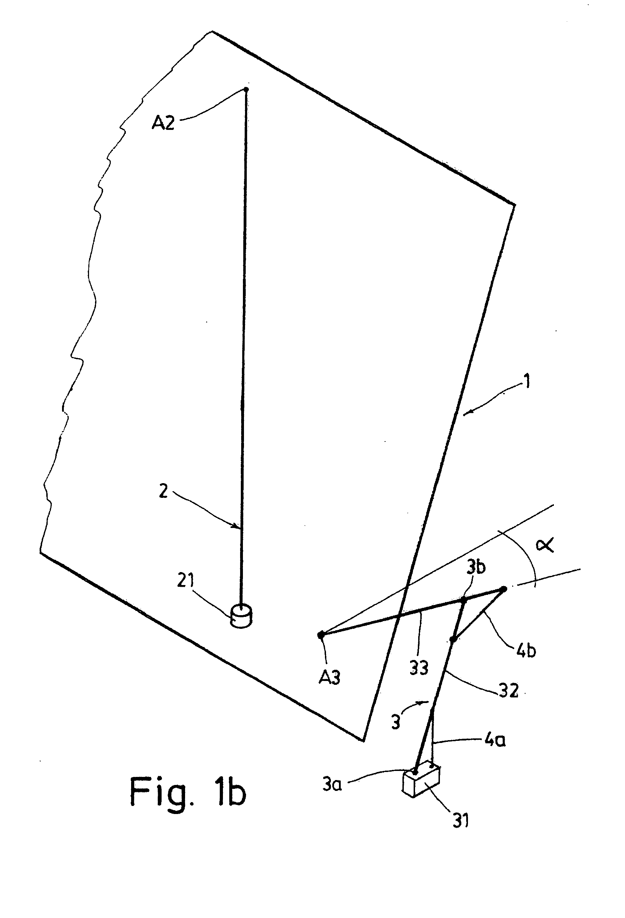

Conformément à l'invention et selon la réalisation représentée -voir figure 1b-, le plan d'alignement de chaque bras articulé (3) forme un angle (α) quelconque avec le plan d'élévation solaire du panneau (1). Cette particularité fait que le bras (3) compense les variations dérivant de l'élévation et de l'azimut.

Pour faire varier l'orientation horaire est/ouest du panneau (1), il faut et il suffit d'activer le déploiement/repliement conjoint et simultané des deux bras articulés (3).

Pour faire varier l'inclinaison saisonnière nord/sud du panneau (1), il faut et il suffit d'activer le déploiement/repliement individuel unitaire de l'un ou l'autre bras articulé (3).

L'activation des deux bras (3), qu'elle soit conjointe/simultanée ou individuelle/unitaire, est contrôlée avec des moyens technologiquement appropriés: par exemple, un contrôle électronique dans lequel les seules données introduites sont la longitude/latitude de l'installation et l'heure GMT pour effectuer un suivi/variation continuels aussi bien de l'orientation horaire que de l'inclinaison saisonnière.

Les paramètres de base dont il faut tenir compte dans la conception de toute reéalisation constructive seront :
- dimension de la poutre solaire (11)
- hauteur de la colonne-tour (2)
- angle (α) de positionnement des bras articulés (3) par rapport au plan de rotation du panneau (1) fixé pour l'élévation du soleil.
- position relative entre les bras (3) et position de l'ancrage inférieur (3a) des bras (3) par rapport à la colonne-tour (2)
- dimension du demi-bras inférieur (32) et position relative des actionneurs (4a), (4b)
- dimension du demi-bras supérieur (33)
- dimensionnement des charnières et des rotules d'assemblage entre les fixations mobiles.

### DESCRIPTION D'UNE RÉALISATION PRÉFÉRENTIELLE

Sur les plans qui sont joints au présent mémoire, on offre la vision d'une réalisation préférentielle proposée.

Le suiveur sera fixé au sol au moyen de trois ancrages : un (21) pour la colonne-tour (2) et un (31) pour chaque bras (3), en formant un triangle isocèle. Chaque ancrage est assemblé au soubassement des fondations.

À l'un des sommets (21) du triangle isocèle théorique, on fixe la colonne-tour (2) dont la hauteur est définie par la dimension de la poutre solaire (11) et par l'angle maximum défini préalablement, au début du suivi de l'élévation du soleil.

Aux deux autres sommets (31), on fixe les supports des bras articulés (3) qui formeront un angle défini avec l'hypoténuse du triangle isocèle hypothétique.

L'accouplement (A2) entre le panneau (1) et la colonne-tour (2) est un élément de fabrication standard et unit la barre supérieure du panneau (1) à une colonne-tour (2), ce qui permet un mouvement sphérique.

La barre inférieure du panneau (1) est assemblée aux deux bras (3) grâce à des accouplements (A3), un pour chaque bras, qui sont des charnières rotulées et solidaires de cette barre.

L'assemblage de tout l'ensemble se fait grâce à la fixation des poutres solaires (11) aux barres supérieure et inférieure, constituant de la sorte ledit panneau solaire (1).

Les actionneurs (4a), (4b) sur les bras articulés (3) seront définis par leur course, la précision du travail et la tolérance de la position, et ils pourront être électriques ou hydrauliques.

Les dimensions des éléments, leur disposition et/ou les matériaux employés sont susceptibles de variations, étant toutes incluses dans l'objet de l'invention, dans la mesure où elles n'en altèrent, n'en changent ou n'en modifient la conception originale.

Les paramètres de la conception, les caractéristiques essentielles et les éléments constructifs décrits dans le présent mémoire doivent être pris au sens large et non limitatif.

## Revendications

1. Suiveur solaire à bras articulés, de ceux qui se composent d'un panneau solaire plat (1) formé d'une ou plusieurs plaques et monté sur un support ayant la possibilité de faire varier aussi bien l'orientation horaire est/ouest que l'inclinaison saisonnière nord/sud ; **se caractérisant par le fait que** :
a) ce support a pour structure une colonne-tour (2) escortée des deux côtés par deux bras identiques (3), un de chaque côté, articulés aussi bien par rapport au panneau (1) que par rapport au sol et ayant une disposition symétrique par rapport à la colonne-tour (2) ;
b) le panneau (1) est unie à la colonne-tour (2) grâce à un accouplement (A2) et à chacun des bras (3) grâce à un accouplement (A3) la disposition de ces trois points d'articulation formant un triangle, de façon à répartir uniformément les efforts dus au propre poids de la structure et/ou provoqués par des conditions climatiques défavorables ;
c) le plan d'alignement de chaque bras articulé (3) forme un angle (α) quelconque avec le plan d'élévation solaire du panneau (1); de façon à ce que le bras (3) compense les variations dues à l'élévation et à l'azimut ;
d) la perpendicularité du panneau (1) par rapport au soleil est obtenue moyenannt le déploiement ou le repliement de ces bras articulés (3), actionnés par des moyens d'action appropriés (4a), (4b) ;
e) les accouplements (A2), (A3) ont, au minimum, une double articulation, de sorte qu'ils permettent de faire basculer le panneau (1) par rapport à la colonne-tour (2) sur, au moins, un plan vertical et un plan horizontal ;
f) pour faire varier l'orientation horaire est/ouest du panneau (1), il suffit d'activer le déploiement/repliement conjoint et simultané des deux bras articulés (3) ;
g) pour faire varier l'inclinaison saisonnière nord/sud du panneau (1), il suffit d'activer le déploiement/repliement individuel unitaire de l'un ou l'autre bras articulé (3);
h) le positionnement du panneau (1) est basé sur lesdits moyens d'action (4a), (4b) disposant d'un système de contrôle électronique dans lequel les seules données sont la longitude/latitude de l'installation et l'heure GMT.

2. Suiveur solaire à bras articulés, selon la revendication antérieure, **se caractérisant par** le fait, en particulier, que lesdits accouplements (A2), (A3) sont à articulations sphériques, ce qui permet de faire basculer dans l'espace le panneau (1) par rapport à la tour (2) et aux bras (2).

3. Suiveur solaire à bras articulés, selon les revendications antérieures, **se caractérisant par le fait que** chacun desdits bras articulés (3) se compose d'un support-base (31), fixé au sol ; un premier demi-bras (32) et un second demi-bras (33), articulés entre eux en (3b) par une de leurs extrémités et articulés respectivement en (3a) à ce support (31) et en (A3) au panneau (1) par leur autre extrémité libre, et avec des moyens d'action (4a), (4b) pour faire basculer, respectivement, les demi-bras (32), (33) à l'ouverture/fermeture.

4. Suiveur solaire à bras articulés, selon la revendication 3, **se caractérisant par le fait que** l'articulation (3b) entre les demi-bras (32), (33) d'un même bras articulé (3) arrive à compenser les variations dimensionnelles du cathète spatial et, de cette façon, suivre l'angle prédéterminé par le mouvement solaire.

5. Suiveur solaire à bras articulés, selon les revendications antérieures, **se caractérisant par** le fait, en particulier, que lesdits moyens d'action (4a), (4b) sont des cylindres hydrauliques.

6. Suiveur solaire à bras articulés, selon les revendications antérieures, **se caractérisant par le fait que** le panneau (1) est constitué de poutres solaires (11) fixées à des tubes longitudinaux.

## Revendications modifiées

### Revendications modifiées conformément à la règle 86(2) CBE.

**1.** Suiveur solaire à bras articulés, de ceux qui se composent d'un panneau solaire plat (1) formé d'une ou plusieurs plaques et monté sur un support ayant la possibilité de faire varier aussi bien l'orientation horaire est/ouest que l'inclinaison saisonnière nord/sud; ce support a pour structure un bras central (2) escortée des deux côtés par deux bras identiques (3), un de chaque côté ayant une disposition symétrique par rapport au bras central (2); **se caractérisant par le fait que**:
a) le panneau (1) est unie au bras central (2) grâce à un accouplement (A2) et à chacun des bras identique (3) grâce à un accouplement (A3); étant lesdits accouplements (A2), (A3) à articulations sphériques;
b) le bras central (2) est une colonne-tour prenant appui sur le sol et
c) chaque bras identique (3) se compose de
c1) un support-base (31) fixé au sol,
c2) un premier demi-bras (32) articulé en (3a) par une extrémité au support-base (31)
c3) un second demi-bras (33) articulé par l'articulation sphérique (A3) par une extrémité au panneau (1),
d) étant les demi-bras (32), (33) articulés entre eux en (3b) et disposant de leurs moyens respectives d'action (4a), (4b) pour les faire basculer á l'ouverture/fermeture; et que
e) pour faire varier l'orientation horaire est/ouest du panneau (1), il suffit d'activer le déploiement/repliement conjoint et simultané des deux bras articulés (3);
f) pour faire varier l'inclinaison saisonnière nord/sud du panneau (1), il suffit d'activer le déploiement/repliement individuel unitaire de l'un ou l'autre bras articulé (3).
